# EUROPÄISCHE PATENTSCHRIFT

(11) **EP 2 659 573 B1**
(45) Veröffentlichungstag und Bekanntmachung des Hinweises auf die Patenterteilung: **07.08.2019**
(21) Anmeldenummer: 11787685.4
(22) Anmeldetag: 23.11.2011
(51) Int. Cl.: H02K 5/16, H02K 7/08, H02K 11/00

(54) **GETRIEBE-ANTRIEBSAGGREGAT MIT EINEM GEHÄUSE UND EINER EINRICHTUNG ZUR LAGERUNG EINER WELLE IN DEM GEHÄUSE**
GEARED DRIVE UNIT WITH HOUSING AND DEVICE FOR MOUNTING A SHAFT IN THE HOUSING
AGRÉGAT D'ENTRAÎNEMENT AVEC CARTER ET DISPOSITIF PERMETTANT DE MONTER UN ARBRE DANS LE CARTER

(30) Priorität: 29.12.2010 DE 102010064298
(43) Veröffentlichungstag der Anmeldung: 06.11.2013
(73) Patentinhaber: Robert Bosch GmbH, 70442 Stuttgart (DE)
(72) Erfinder: MILI, Tarek, 67630 Lauterbourg (DE); SCHEURICH, Stephan, 76199 Karlsruhe (DE); HUESGES, Mario, 77830 Buehlertal (DE); LAUK, Detlef, 77871 Renchen (DE)
(86) Internationale Anmeldenummer: PCT/EP2011/070797
(87) Internationale Veröffentlichungsnummer: WO 2012/089427

(56) Entgegenhaltungen:
- EP-A1- 0 998 013
- DE-A1- 3 906 842
- DE-A1-102008 000 887
- DE-A1-102009 019 726

## Beschreibung

### Stand der Technik

Die Erfindung betrifft ein Getriebe-Antriebsaggregat mit einem Gehäuse und einer Einrichtung zur Lagerung einer Welle nach dem Oberbegriff des Anspruchs 1.

Eine derartige Einrichtung ist aus der DE 10 2009 019726 A1 bekannt. Die bekannte Einrichtung umfasst einen Aufnahmekörper für ein Lager, der das Lager radial bereichsweise umgreift. Ferner weist der Aufnahmekörper Haltearme auf, die der Befestigung des Aufnahmekörpers im Gehäuse dienen. Dabei kann es vorgesehen sein, dass mittels der Haltearme der Aufnahmekörper eine Richtung elastisch kraftbeaufschlagt ist und an einer Stufe eines Getriebegehäuses anliegt.

Darüber hinaus ist aus der DE 39 06 842 A1 eine Einrichtung bekannt, bei der der Aufnahmekörper für ein Lager in einem Polgehäuse eines Antriebsaggregats radial eingespannt ist und somit in axialer Richtung gesichert ist. Der Aufnahmekörper liegt in axialer Richtung jedoch nicht an einem Anschlag an.

Aus der nachveröffentlichten DE 10 2009 027501 A1 ist eine weitere Einrichtung der Anmelderin bekannt, bei der es vorgesehen ist, dass ein der Lagerung einer Ankerwelle dienendes Lager in einem separaten Aufnahmekörper aufgenommen ist, welcher wiederum in einem Gehäuse, beispielsweise in einem Gehäuse einer Getriebe-Antriebseinheit, angeordnet ist. Mittels einer derartigen Anordnung ist es möglich, einen Elektromotor in einem noch nicht verbauten Zustand hinsichtlich seiner Funktion zu überprüfen. Nähere Angaben bezüglich der Anordnung des Aufnahmekörpers in dem Gehäuse sind der genannten Schrift jedoch nicht zu Weitere Stand der Technik ist EP0998013A1.

Üblicherweise werden Lager im Gehäuse fixiert, indem sie einseitig direkt in ein Gehäuseteil eingebracht werden. Entgegen der Montagerichtung werden die Lager durch Kraft- oder Formschluss gehalten. Der Formschluss wird in der Regel über Normteile, Federscheiben, Sicherungs- oder Sprengringe, oder aber mittels Formteilen, die fest mit dem Gehäuseteil verbunden sind, hergestellt. Die Krafteinleitung vom Lager findet in der Regel direkt über das Gehäuse oder über das formschlusserzeugende Element statt. Alternativ ist es bekannt, eine axiale Abstützung einer Welle, beispielsweise einer Ankerwelle, an beiden Wellenenden sicherzustellen, indem entsprechende Anschläge die Ankerwelle aufnehmen. Zum Ausgleich der axialen Toleranzen ist ein Einstellprozess, z.B. über Schrauben oder über elastische Elemente, wie z.B. Federn, erforderlich. Die oben beschriebenen Möglichkeiten zur Lagerung einer Welle in einem Gehäuse sind relativ aufwändig gestaltet, da diese zusätzliche Teile benötigen bzw. einen relativ hohen Aufwand bezüglich einer genauen Fertigung der Einzelteile benötigen.

### Offenbarung der Erfindung

Ausgehend von dem dargestellten Stand der Technik liegt der Erfindung die Aufgabe zugrunde, eine Einrichtung zur Lagerung einer Welle in einem Gehäuse derart weiterzubilden, dass eine relativ einfache und preiswerte Lagerung der Welle in dem Gehäuse ermöglicht wird, wobei besonders hohe Kräfte auf das Lager und den Aufnahmekörper übertragen werden können. Diese Aufgabe wird bei einem erfindungsgemäßen Getriebe-Antriebsaggregat mit den Merkmalen des Anspruchs 1 gelöst.

Erfindungsgemäß ist es vorgesehen, dass der Aufnahmekörper besonders kostengünstig herstellbar als Tiefziehteil ausgebildet ist. Eine derartige Ausbildung ermöglicht die Gestaltung des Aufnahmekörpers als Massenbauteil.

Erfindungsgemäß ist es dabei vorgesehen, dass der Aufnahmekörper aus Blech ausgebildet ist und das Lager durch Form- bzw. Kraftschluss im Aufnahmekörper fixiert. Erst die Aufnahme des Aufnahmekörpers aus Blech ermöglicht die angesprochenen Befestigungsmöglichkeiten, die mit relativ einfachem Aufwand realisierbar sind.

Erfindungsgemäß ist zur Anordnung bzw. Fixierung des Aufnahmekörpers in dem Gehäuse vorgesehen, dass der Aufnahmekörper einen Flansch aufweist, der mit dem Gehäuse form- oder kraftschlüssig zusammenwirkt. Hierbei kann es dabei genauso vorgesehen sein, dass der Aufnahmekörper mittels Befestigungselementen mit dem Elektromotor verbunden ist. Dadurch wird eine besonders sichere Aufnahme bzw. Befestigung des Aufnahmekörpers im Gehäuse ermöglicht.

Erfindungsgemäß ist es vorgesehen, dass das Lager im Aufnahmekörper durch Umbördeln bzw. Laschen fixiert ist.

Vorteilhafte Weiterbildungen der erfindungsgemäßen Einrichtung zur Lagerung einer Welle in einem Gehäuse sind in den Unteransprüchen angegeben.

Eine weitere vorteilhafte Ausgestaltung der Erfindung sieht vor, dass der Aufnahmekörper in einem Gehäuse eines Elektromotors angeordnet ist und eine elektromagnetische Abschirmung des Elektromotors ausbildet. In diesem Fall weist der Aufnahmekörper neben seiner Funktion zur Aufnahme des Lagers eine Zusatzfunktion auf, die ansonsten ggf. durch zusätzliche, separate Bauteile, wie Abschirmbleche oder ähnlichem, gelöst werden müsste.

Offenbart ist auch ein Aggregat mit einen Elektromotor für eine Getriebe-Antriebseinheit mit einer erfindungsgemäßen Einrichtung und einem Gehäuse, in dem der Aufnahmekörper aufgenommen ist. Ein derartiges Aggregat lässt sich besonders kostengünstig durch Verwendung preiswert herstellbarer Teile sowie der Möglichkeit, die Teile mit relativ großen Toleranzen zu fertigen, ermöglichen. Weitere Vorteile, Merkmale und Einzelheiten der Erfindung ergeben sich aus der nachfolgenden Beschreibung bevorzugter Ausführungsbeispiele sowie anhand der Zeichnung. Diese zeigt in:
- Fig. 1: eine perspektivische Ansicht auf einen Aufnahmekörper zur Lagerung einer Welle mit einem in dem Aufnahmekörper angeordneten Lager,
- Fig. 2: ein gegenüber Fig. 1 abgewandelter Aufnahmekörper, der mit einer Bürstenträgereinheit verbunden ist,
- Fig. 3: einen Längsschnitt durch einen Elektromotor unter Verwendung eines erfindungsgemäßen Aufnahmekörpers und
- Fig. 4: die Anordnung eines erfindungsgemäßen Aufnahmekörpers zwischen verschiedenen Bauteilen eines Aggregats im Längsschnitt.

Gleiche Bauteile bzw. Bauteile mit gleicher Funktion sind in den Figuren mit den gleichen Bezugsziffern versehen.

In den Figuren ist eine erfindungsgemäße Einrichtung 10 zur Lagerung einer Welle 1 in einem Gehäuse dargestellt. Die Lagerung der Welle 1 findet bevorzugt, jedoch nicht beschränkend, ihren Einsatz in Getriebe-Antriebseinheiten oder Elektromotoren, wie sie in der Kraftfahrzeugindustrie, beispielsweise als Teil eines Fensterheberantriebs oder eines Scheibenwischerantriebs, dienen.

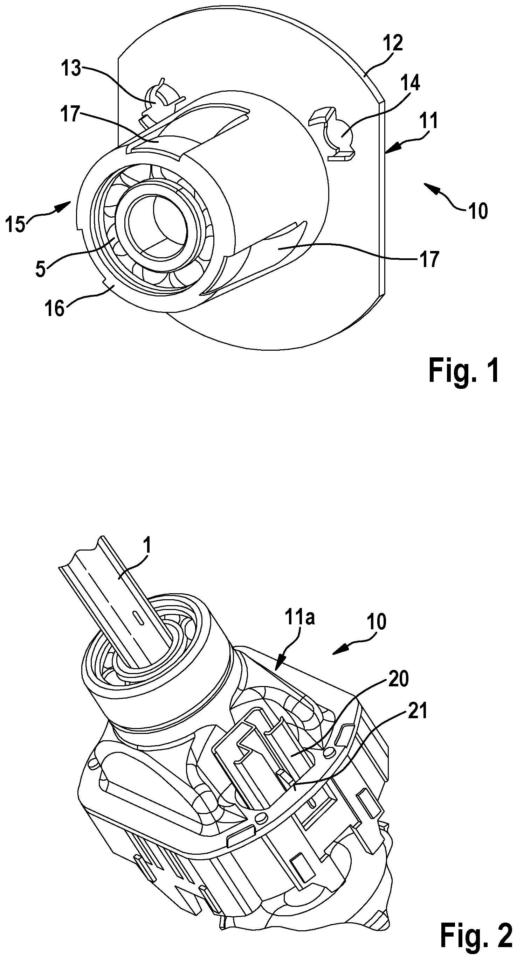

In der Fig. 1 ist ein erstes Ausführungsbeispiel der Erfindung dargestellt, bei der die Einrichtung 10 einen Aufnahmekörper 11 zur Aufnahme eines Lagers 5 umfasst. Bei dem in der Fig. 1 dargestellten Ausführungsbeispiel ist das Lager 5 als Kugellager ausgebildet. Es liegt selbstverständlich im Rahmen der Erfindung, auch andere Lager 5 zu verwenden, z.B. Gleitlager. Der Aufnahmekörper 11 ist als Tiefziehteil ausgebildet und besteht aus Blech. Erweist einen umlaufenden Flanschbereich 12 auf, in dem beispielhaft zwei Durchgangsöffnungen 13, 14 ausgebildet sind, über die der Aufnahmekörper 11 mit Bauteilen eines in der Fig. 1 nicht dargestellten Elektromotors befestigbar ist, insbesondere mit Schrauben, Stiften oder ähnlichem. Weiterhin ist der Aufnahmekörper im Gehäuse, zumindest mittelbar, in einer Richtung axial fixiert aufgenommen. Des weiteren können auch Durchgangsöffnungen 13, 14 zur Durchführungen von elektrischen Leitungen im Flanschbereich 12 das Aufnahmekörpers 11 ausgebildet sein.

Ausgehend von dem Flanschbereich 12 weist der Aufnahmekörper 11 einen zylindrischen bzw. rohrförmigen Aufnahmebereich 15 auf, in dem das Lager 5 form- und kraftschlüssig aufgenommen ist. Hierzu bildet ein umgebördelter Bodenabschnitt 16 des Aufnahmebereichs 15 einen axialen Anschlag für das Lager 5 aus. Radial ist das Lager 5 mit höchstens minimalem Spalt in dem Aufnahmebereich 15 aufgenommen bzw. von diesem umfasst. Ferner erkennt man mehrere, beispielsweise drei, in gleichmäßigen Winkelabständen über den Umfang des Aufnahmebereichs 15 verteilte, in Axialrichtung des Aufnahmebereichs 15 angeordnete Laschen 17, die durch Ausstanzen des Aufnahmebereichs 15 ausgebildet sind. Durch Umbiegen bzw. Eindrücken der Laschen 17 in den Aufnahmebereich 15 hinein wird das Lager 5 nach dessen Einführen in den Aufnahmebereich 15 axial im Aufnahmebereich 15 gesichert.

In der Fig. 2 ist ein weiteres Ausführungsbeispiel der Erfindung dargestellt. Hierbei bildet der tiefgezogenen Aufnahmekörper 11a zusammen mit einem weiteren Bauteil, beispielsweise einem Bauteil eines im Einzelnen nicht mehr dargestellten Elektromotors, beispielhaft eines Bürstenträgers 20, eine vormontierbare Baueinheit aus. Der Bürstenträger 20 des Elektromotors ist hierbei mit dem Aufnahmekörper 11a fest verbunden, z.B. durch eine kraftschlüssige Verbindung mit Aufnahmestiften oder ähnlichem. Ferner erkennt man in der Fig. 2, dass der Aufnahmekörper 11a einen Durchbruch 21 aufweist, durch den ein Abschnitt des Bürstenträgers 20 hindurchragt.

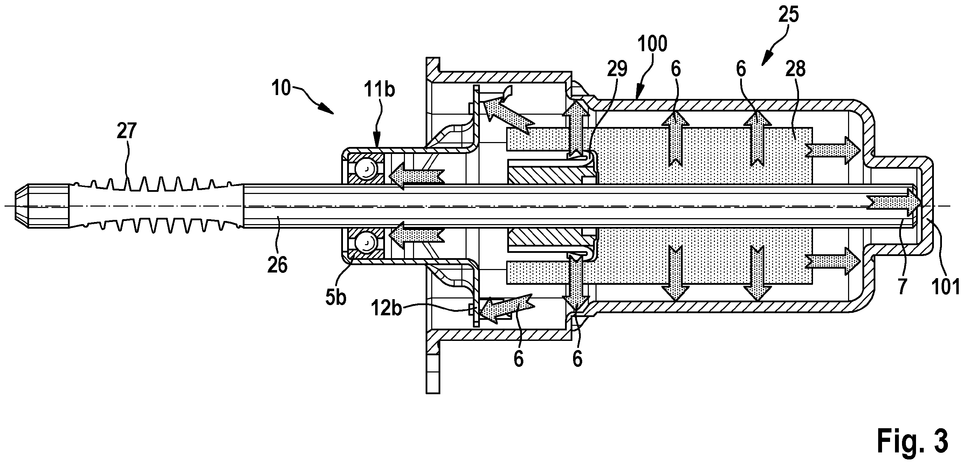

In der Fig. 3 ist eine weitere Ausführungsform der Erfindung dargestellt. Hierbei ist die Einrichtung 10 Bestandteil eines Elektromotors 25. Eine Ankerwelle 26 des Elektromotors 25 ragt aus dem Gehäuse 100 des Elektromotors 25 hinaus und weist an seinem Wellenende eine Verzahnung 27 auf. Ferner erkennt man innerhalb des Gehäuses 100 einen auf der Ankerwelle 26 drehfest angeordneten Anker 28 sowie einen Kommutator 29. Der Kommutator 29 und der Anker 28 emittieren elektromagnetische Strahlen, was durch die Pfeile 6 angedeutet sein soll. Der tiefgezogene Aufnahmekörper 11b ist mit seinem Flanschbereich 12b innerhalb des Gehäuses 100 angeordnet, wobei er mit Bauteilen des Elektromotors 25, vorzugsweise über nicht dargestellte Verbindungselemente, verbunden ist. Insbesondere, wenn der Aufnahmekörper 11b aus Metall bzw. Blech besteht wirkt der Aufnahmekörper 11b somit als Abschirmelement, das eine Abstrahlung von elektromagnetischer Strahlung aus dem Gehäuse 100 reduziert bzw. vermindert. Ferner ist erkennbar, dass das Lager 5b innerhalb des Aufnahmekörpers 11b lediglich in einer Richtung axial fixiert ist. Die Abstützung bzw. axiale Sicherung der Ankerwelle 26 im Gehäuse 100 erfolgt über das eine Ende 7 der Ankerwelle 26, das in Wirkverbindung mit dem Gehäuseboden 101 angeordnet ist. Alternativ ist das Lager 5b als Festlager ausgebildet, das die axial auf die Ankerwelle einwirkenden Kräfte aufnimmt und an das Gehäuse 100 ableitet. Dabei ist das Lager 5 b vorzugsweise als Kugellager ausgebildet, dessen Innenring drehfest und axial fixiert auf der Ankerwelle befestigt ist. Der Außenring des Kugellagers ist fest im Gehäuse 100 fixiert, so dass keine axiale Abstützung über die Stirnseiten der Ankerwelle notwendig ist.

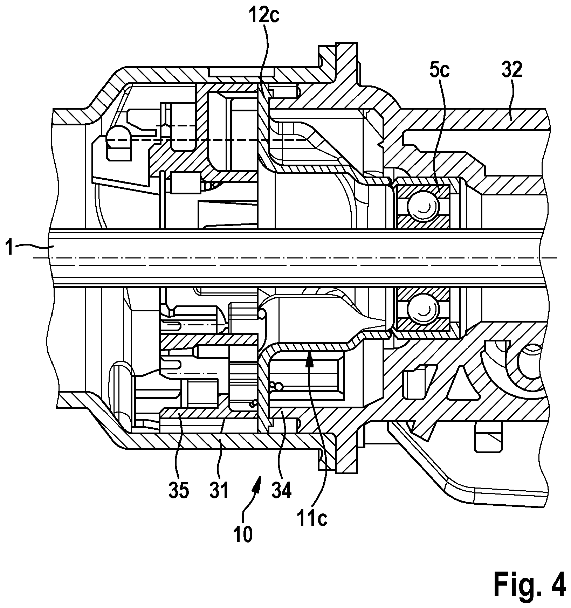

In der Fig. 4 ist eine weitere Ausgestaltung der Erfindung dargestellt. Hierbei ist der tiefgezogene Aufnahmekörper 11c innerhalb eines Polrohres 31 mit seinem Flanschbereich 12c aufgenommen bzw. fixiert. Der das Lager 5c tragende Bereich des Aufnahmekörpers 11c ragt aus dem Polrohr 31 heraus. Der Aufnahmekörper 11c ist axial zwischen dem Polrohr 31 und einem Getriebegehäuse 32 verspannt, das Teil eines Getriebe-Antriebsaggregat ist. Hierbei drückt eine stirnseitige Fläche 34 des Getriebegehäuses 32 gegen den Flanschbereich 12c des Aufnahmekörpers 11c, der wiederum auf der der Fläche 34 gegenüberliegenden Seite in Anlagekontakt gegen ein Bauteil 35 anliegt, das innerhalb des Polrohrs 31 angeordnet ist.

Die soweit beschriebene Einrichtung 10 bzw. deren Bestandteile können im Rahmen des durch die Ansprüche definierten Schutzbereiches in vielfältiger Art und Weise abgewandelt bzw. modifiziert werden. Der Erfindungsgedanke besteht in einer Anordnung eines der Lagerung einer Welle 1 dienenden Lagers 5, 5b, 5c in einem separaten Aufnahmekörper 11, 11a, 11b, 11c, welcher wiederum form- bzw. kraftschlüssig in einem Gehäuse 100 aufgenommen bzw. befestigt ist, wobei der Aufnahmekörper 11, 11a, 11b, 11c mit Bauteilen des Elektromotors verbunden ist.

## Patentansprüche

1. Getriebe-Antriebsaggregat mit einem Gehäuse (100, 31, 32) und einer Einrichtung (10) zur Lagerung einer Welle (1) in dem Gehäuse (100, 31, 32), mit einem mit der Welle (1) verbundenen Lager (5, 5b, 5c), das zumindest mittelbar in dem Gehäuse (100, 31, 32) durch Form- oder Kraftschluss angeordnet ist, wobei das Lager (5, 5b, 5c) in einem separaten Aufnahmekörper (11, 11b, 11c) aufgenommen ist, wobei der Aufnahmekörper (11, 11b, 11c) durch Form- bzw. Kraftschluss in zumindest einer Richtung mit dem Gehäuse (100, 31, 32) fixiert aufgenommen ist, wobei der Aufnahmekörper (11, 11b, 11c) unmittelbar mit Bauteilen eines Elektromotors (25) verbunden ist, wobei der Aufnahmekörper (11, 11b, 11c) als Tiefziehteil aus Blech ausgebildet ist und einen zylindrischen bzw. rohrförmigen Aufnahmebereich (15) für das Lager (5, 5b, 5c) aufweist, wobei der Aufnahmekörper (11, 11b, 11c) einen Flansch (12,12b, 12c) aufweist, der mit dem Gehäuse (100, 31, 32) form- oder kraftschlüssig zusammenwirkt,
**dadurch gekennzeichnet, dass** das Lager (5; 5b; 5c) durch Umbördeln bzw. Laschen (17) im Aufnahmekörper (11, 11b, 11c) fixiert ist, und dass die Befestigung des Aufnahmekörpers (11, 11b, 11c) in einem Polrohr (31) des Elektromotors (25) mittels eines Getriebegehäuses (32) erfolgt, wobei der Aufnahmekörper (11, 11b, 11c) zwischen dem Getriebegehäuse (32) und dem Polrohr (31) axial fixiert ist.

2. Getriebe-Antriebsaggregat nach Anspruch 1,
**dadurch gekennzeichnet,**
**dass** der Aufnahmekörper (11b) mittels Befestigungselementen mit den Bauteilen des Elektromotors (25) verbunden ist.

3. Getriebe-Antriebsaggregat nach einem der Ansprüche 1 oder 2,
**dadurch gekennzeichnet,**
**dass** der Aufnahmekörper (11b) eine elektromagnetische Abschirmung des Elektromotors (25) ausbildet.

4. Getriebe-Antriebsaggregat nach einem der Ansprüche 1 bis 3,
**dadurch gekennzeichnet**, der Aufnahmekörper (11, 11b, 11c) unmittelbar mit einem Bürstenträger (20) als Bauteil des Elektromotors (25) verbunden ist und mit diesem eine vormontierbare Baueinheit ausbildet.

## Claims

1. Transmission/drive assembly comprising a housing (100, 31, 32) and a device (10) for mounting a shaft (1) in the housing (100, 31, 32), comprising a bearing (5, 5b, 5c) which is connected to the shaft (1) and is arranged at least indirectly in the housing (100, 31, 32) by an interlocking or force-fitting connection, wherein the bearing (5, 5b, 5c) is received in a separate receiving body (11, 11b, 11c), wherein the receiving body (11, 11b, 11c) is received in a fixed manner by an interlocking or force-fitting connection in at least one direction with the housing (100, 31, 32), wherein the receiving body (11, 11b, 11c) is connected directly to components of an electric motor (25), wherein the receiving body (11, 11b, 11c) is designed as a deep-drawn part composed of a sheet metal and has a cylindrical or tubular receiving region (15) for the bearing (5, 5b, 5c), wherein the receiving body (11, 11b, 11c) has a flange (12, 12b, 12c) which interacts with the housing (100, 31, 32) in an interlocking or force-fitting manner, **characterized in that** the bearing (5; 5b; 5c) is fixed in the receiving body (11, 11b, 11c) by beading or tabs (17), and **in that** the receiving body (11, 11b, 11c) is fastened in a pole tube (31) of the electric motor (25) by means of a transmission housing (32), wherein the receiving body (11, 11b, 11c) is axially fixed between the transmission housing (32) and the pole tube (31).

2. Transmission/drive assembly according to Claim 1,
**characterized**
**in that** the receiving body (11b) is connected to the components of the electric motor (25) by means of fastening elements.

3. Transmission/drive assembly according to either of Claims 1 and 2,
**characterized**
**in that** the receiving body (11b) forms an electromagnetic shield of the electric motor (25).

4. Transmission/drive assembly according to one of Claims 1 to 3,
**characterized in that** the receiving body (11, 11b, 11c) is connected directly to a brush carrier (20) as a component of the electric motor (25) and forms a preassemblable structural unit with the said brush carrier.

## Revendications

1. Agrégat d'entraînement de transmission comprenant un carter (100, 31, 32) et un dispositif (10) permettant de monter un arbre (1) dans le carter (100, 31, 32), comportant un palier (5, 5b, 5c) relié à l'arbre (1) et agencé au moins indirectement par complémentarité de forme ou de force dans le carter (100, 31, 32), dans lequel le palier (5, 5b, 5c) est logé dans un corps de logement séparé (11, 11b, 11c), dans lequel le corps de logement (11, 11b, 11c) est logé de manière fixe avec le boîtier (100, 31, 32) dans au moins une direction par complémentarité de forme ou de force, dans lequel le corps de logement (11, 11b, 11c) est relié directement à des composants d'un moteur électrique (25), dans lequel le corps de logement (11, 11b, 11c) est réalisé sous la forme d'une pièce emboutie en tôle et présente une zone de logement cylindrique ou tubulaire (15) pour le palier (5, 5b, 5c), dans lequel le corps de logement (11, 11b, 11c) présente une bride (12, 12b, 12c) qui interagit par complémentarité de forme ou de force avec le boîtier (100, 31, 32),
**caractérisé en ce que** le palier (5 ; 5b ; 5c) est fixé dans le corps de logement (11, 11b, 11c) par des rabats ou des languettes (17) et **en ce que** le corps de logement (11, 11b, 11c) est fixé dans un tube polaire (31) du moteur électrique (25) au moyen d'un carter de transmission (32), dans lequel le corps de logement (11, 11b, 11c) est fixé axialement entre le carter de transmission (32) et le tube polaire (31).

2. Agrégat d'entraînement de transmission selon la revendication 1,
**caractérisé en ce que** le corps de logement (11b) est relié aux composants du moteur électrique (25) au moyen d'éléments de fixation.

3. Agrégat d'entraînement de transmission selon l'une des revendications 1 ou 2,
**caractérisé en ce que** le corps de logement (11b) constitue un blindage électromagnétique du moteur électrique (25).

4. Agrégat d'entraînement de transmission selon l'une des revendications 1 à 3,
**caractérisé en ce que** le corps de logement (11, 11b, 11c) est relié directement à un porte-balais (20) en tant que composant du moteur électrique (25) et forme avec celui-ci un agrégat structurel pouvant être monté à l'avance.
